# EUROPEAN PATENT APPLICATION

(11) **EP 2 475 109 A1**
(43) Date of publication of application: **11.07.2012**
(21) Application number: 11360005.0
(22) Date of filing: 07.01.2011
(51) Int. Cl.: H04B 7/06

(54) **Determining a channel state information**

(71) Applicant: Alcatel Lucent, 75007 Paris (FR)
(72) Inventor: Wong, Shin Horng, Chippenham Wiltshire, SN14 0SP (GB); Baker, Matthew P J, Canterbury Kent, CT2 9DB (GB)
(74) Representative: Leppard, Andrew John

(57) **Abstract**

The present invention relates to apparatus and methods for providing channel state information. A method of determining a current channel state of a wireless communications channel provided between a first network node having at least two transmission antennas and a second network node having at least one reception antenna comprises the steps of: receiving, over at least one transmission interval, updated channel state information representing a change in channel state from a previous channel state represented by previous channel state information transmitted between said first network node and said second network node, said channel state information being represented by a vector; and estimating said current channel state by combining said updated channel state information with said previous channel state information. Combining the updated channel state information with the previous channel state information recognises that even though the channel state may have changed, the previous channel state information may still be of relevance and may be combined with the newly signalled absolute value rather than being discarded to provide a closer approximation to the current channel state and may otherwise be possible. This allows the delay in implementing changes in the pre-coder to be minimised by enabling the pre-coder to be updated after every transmission interval.

## Description

### FIELD OF THE INVENTION

The present invention relates to apparatus and methods for providing channel state information.

### BACKGROUND

Base stations in wireless communications systems provide wireless connectivity to user equipment within the geographic areas, or cells, associated with the base station. The wireless communications links between the base station and each of the user equipment typically include one or more downlink (or forward) channels for transmitting information from the base station to the user equipment and one or more uplink (or reverse) channels for transmitting information from the user equipment to the base station. Multiple-input-multiple-output (MIMO) techniques may be employed when the base station and, optionally, the user equipment include multiple antennas. For example, a base station that includes multiple antennas can transmit multiple independent and distinct signals to multiple user equipment concurrently on the same frequency band on downlink. Likewise, user equipment that includes multiple antennas can transmit multiple independent and distinct signals to multiple base stations concurrently on the same frequency band on uplink.

For example, consider a cellular system with M antennas at the base station and N antennas at the user equipment. In such communication systems, the radio channel between the base station and the user equipment can be described in terms of N x M links (sub-channels). Each link typically has a time-varying complex gain (i.e. amplitude and phase). If the radio channel is wide band (i.e. the signal rate is greater than the delay spread of the channel), the complex gain varies across the bandwidth of the transmitted signal. The overall state of the radio channel can therefore be described as a series of complex weights which can be represented as a series of vectors representing each of those complex weights. This channel state information is measured by a receiving network node and one or more vectors may be fed back to the transmitting network node to allow that network node to adapt characteristics of the signals transmitted to match in the most appropriate way to the prevailing channel state in order to improve, for example, throughput. Typically, such transmission adaptation is achieved by applying pre-coding vectors on each transmission branch before transmitting the signal. Typically, a codebook of pre-coding vectors is configured in both the base station and the user equipment which are referred to when feeding back these pre-coding vectors.

Although techniques exist to provide channel state information feedback, they each have their own shortcomings. Accordingly, it is desired to provide an improved technique for providing channel state information.

### SUMMARY

According to a first aspect there is provided a method of determining a current channel state of a wireless communications channel provided between a first network node having at least two transmission antennas and a second network node having at least one reception antenna, the method comprising the steps of: receiving, over at least one transmission interval, updated channel state information representing a change in channel state from a previous channel state represented by previous channel state information transmitted between the first network node and the second network node, the channel state information being represented by a vector; and estimating the current channel state by combining the updated channel state information with the previous channel state information.

The first aspect recognises that a network node, such as a base station or user equipment (UE), typically uses estimates of the radio channel state to determine at least one pre-coding vector for another network node such as user equipment, to use in the following transmission. It should therefore be understood that the received channel state information may comprise a recommendation or instruction to use a particular precoding vector. The accuracy of these pre-coding vectors may be increased by using more time for their transmission. However, there is delay in the feedback and, during this delay, the radio conditions may have changed, particularly when the user equipment is mobile, which may reduce the gain or even result in a signal loss. Any increase in accuracy of the feedback further increases the delay. Whilst it is theoretically possible to shorten a Transmission Time Interval (TTI) so that the feedback cycle is faster, reducing the TTI may require significant changes to existing systems and it may also reduce the accuracy of the feedback.

It is also desirable to take account of the consideration that the number of bits available per timeslot for sending feedback from the base station to the user equipment is often very limited; for example only 1 bit per timeslot is available when using a Fractional Dedicated Physical Channel (F-DPCH) in a UMTS system.

Although it is possible to update the pre-coding vectors with relative steps in phase, this has the limitation that the update rate is constrained by the step size, and it is not well adapted to bursty data traffic, where an absolute value may be needed initially each time the data transmission starts.

Accordingly, it is desirable to reduce the delay without reducing the accuracy, or to improve the accuracy without increasing the delay, while also being suitable for bursty data traffic.

Hence, updated channel state information is provided over at least one transmission interval. The updated channel state information may represent a change in channel state. This change may represent an absolute value indicating the new channel state (or precoder to be used) or merely a difference between the previous channel state and the current channel state. The channel state information may be represented by a vector. The current channel state may then be estimated by combining the updated channel state information with the previous channel state information. That is to say, the current channel state may be determined based on both the previous channel state and the current channel state information. Combining the updated channel state information with the previous channel state information is advantageous since this recognises that even though the channel state may have changed, the previous channel state information may still be of relevance. In particular, because the number of bits available to support the transmission of the updated channel state information may be relatively low, the rate at which the updated channel state information can be transmitted may be relatively low and may indeed be insufficient to indicate an absolute value of a pre-coding vector with satisfactory precision. In particular, in fast changing propagation channels, relative signalling alone may not allow the pre-coding vector to be updated sufficiently fast and therefore it may be beneficial to signal new absolute values, but in these situations, the previous value may still be of some relevance and may be combined with the newly signalled absolute value, rather than being discarded, to provide a closer approximation to the current channel state than may otherwise be possible. This allows the delay in implementing changes in the pre-coder to be minimised by enabling the pre-coder to be updated after every transmission interval.

In one embodiment, the current channel state is represented by a first vector, the previous channel state information is represented by a second vector, the step of receiving comprises: receiving, over a plurality of transmission intervals, the updated channel state information, each transmission interval providing a portion of the updated channel state information, each portion of updated channel state information representing a subset of a set of vectors, said subset encompassing the first vector and the step of estimating comprises: estimating the current channel state following each transmission interval by selecting, as the first vector, a vector within the recursive subset of vectors indicated by the portion of the updated channel state information provided within that transmission interval. Hence, each transmission interval may provide a portion of the updated channel state information. These portions may still be used following each transmission interval to update the pre-coder to a newly approximated value based on the portions of updated channel state information which have been received. The complete channel state information comprising all of its portions may indicate a new absolute value of the channel state which may be utilised by the pre-coder. However, each portion of the channel state information may be utilised in order to provide an approximation of the current channel state. Each portion may define a subset of all the available vectors representing the current channel state. Each portion may define a recursive subset in that each subsequent portion may define a further subset within an existing subset defined by a previous portion. The selection of the subsets may be determined based both on the information encoded in the portion and on the previous channel state information. This allows an approximation to the current channel state to be made rapidly using the typically very few bits available in each transmission interval.

In one embodiment, the step of estimating comprises: estimating the current channel state following each transmission interval by selecting, as the first vector, a vector from within the recursive subset of vectors indicated by the portion of the updated channel state information provided within that transmission interval which is closest in phase with the second vector. Accordingly, that vector within the subset which has the smallest phase offset to the vector representing the previous channel state information may be selected. It will be appreciated that this vector may or may not be the eventual vector which represents the current channel state information but may provide a close approximation to this with very little signalling overhead.

In one embodiment, the step of estimating comprises: estimating the current channel state following each transmission interval by selecting, as the first vector, the second vector if the second vector is within the recursive subset of vectors indicated by the portion of the updated channel state information provided within that transmission interval. Accordingly, the vector representing the previous channel state may continue to be used given that it continues to fall within the subset defined by the updated channel state information. It will be appreciated that this helps to improve the stability of the system by reducing pre-coder changes,

In one embodiment, the step ot estimating comprises: estimating the current Channel state following each transmission interval by selecting, as the first vector, a vector from within the recursive subset of vectors indicated by the portion of the updated channel state information provided within that transmission interval which is an average of the recursive subset of vectors indicated by the portion of the updated channel state information. Accordingly, an approximation to the current channel state information may be provided by selecting, as the pre-coding vector, an average of all of the vectors within the defined subset.

In one embodiment, the step of estimating comprises: estimating the current channel state following each transmission interval by selecting, as the first vector, a vector from within the recursive subset of vectors indicated by the portion of the updated channel state information provided within that transmission interval which is an average of the second vector and an average of the recursive subset of vectors indicated by the portion of the updated channel state information. Accordingly, an average of the group of vectors within this subset may then be averaged with the vector representing the previous channel state information. This double average may provide a closer indication of the current channel state.

In one embodiment, the updated channel state information represents a change in phase between a first vector representing the current channel state, a second vector representing the previous channel state and the step of estimating comprises: estimating the current channel state by selecting, as the first vector, a vector having a phase offset from the second vector indicated by the updated channel state information. Accordingly, it may be possible to simply indicate the updated vector using a phase offset from the vector representing the previous channel state.

In one embodiment, the step of receiving comprises receiving updated channel state information over a single transmission interval, the updated channel state information representing one of a positive and negative phase offset from the second vector and the step of estimating comprises: estimating the current channel state by selecting, as the first vector, a vector adjacent the second vector having a phase offset indicated by the updated channel state information. Accordingly, the updated channel state information may indicate which of the two neighbouring vectors to the current vector closest approximates to the current channel state. It would be appreciated that this provides for a particularly simple technique for indicating changes to the channel state in a single transmission interval.

In one embodiment, the updated channel state information represents one of a clockwise and counter-clockwise phase offset from the second vector and the step of estimating comprises: estimating the current channel state by selecting, as the first vector, an adjacent vector which is one of clockwise and counter-clockwise from the second vector as indicated by the updated channel state information. It will be appreciated that in a unitary circle representation of vectors, each vector will have a clockwise adjacent vector and a counter-clockwise adjacent vector which may be selected.

In one embodiment, the step of receiving comprises receiving updated channel state information over a plurality of transmission intervals, each transmission interval providing a portion of the updated channel state information and the step of estimating comprises: estimating the current channel state following each transmission interval by selecting, as the first vector, a vector having a phase offset from the second vector indicated by the portion of the updated channel state information provided within that transmission interval. The combined portions transmitted over multiple intervals may provide the phase offset. By providing portions of channel state information over more than one transmission interval, it is possible to indicate the phase offset with greater accuracy.

In one embodiment, the updated channel station information comprises a sign portion representing a direction of phase offset from the second vector and at least one magnitude portion representing a magnitude of phase offset from the second vector and the step of estimating comprises: estimating the current channel state by selecting, as the first vector, a vector having a phase offset from the second vector indicated by the sign portion and the magnitude portion of the updated channel state information. Accordingly, both a direction and magnitude of phase offset may be provided to indicate the phase offset of the current channel state from the previous channel state. Typically, the sign portion may represent one of a clockwise and counter-clockwise direction from the current vector. Typically, the first magnitude portion may represent a most significant bit in order to rapidly achieve an initial close approximation to the current channel state, with subsequent portions providing the least significant bits in order to then provide further refinements.

In one embodiment, the updated channel station information comprises at least one additional magnitude portion provided in at least one additional transmission interval representing an additional magnitude of phase offset from the second vector and the step of estimating comprises: estimating the current channel state by selecting, as the first vector, a vector having a phase offset from the second vector indicated by the sign portion and the additional magnitude portion of the updated channel state information provided within that additional transmission interval.

According to a second aspect there is provided a network node operable to determine a current channel state of a wireless communications channel provided between a first network node having at least two transmission antennas and a second network node having at least one reception antenna, the network node comprising: reception logic operable to receive, over at least one transmission interval, updated channel state information representing a change in channel state from a previous channel state represented by previous channel state information transmitted between the first network node and the second network node, the channel state information being represented by a vector; and estimating logic operable to estimate the current channel state by combining the updated channel state information with the previous channel state information.

In one embodiment, the current channel state is represented by a first vector, the previous channel state information is represented by a second vector, the reception logic is operable to receive, over a plurality of transmission intervals, the updated channel state information, each transmission interval providing a portion of the updated channel state information, each portion of updated channel state information representing a recursive subset of vectors encompassing the first vector and the estimating logic is operable to estimate the current channel state following each transmission interval by selecting, as the first vector, a vector within the recursive subset of vectors indicated by the portion of the updated channel state information provided within that transmission interval.

In one embodiment, the estimating logic is operable to estimate the current channel state following each transmission interval by selecting, as the first vector, a vector from within the recursive subset of vectors indicated by the portion of the updated channel state information provided within that transmission interval which is closest in phase with the second vector.

In one embodiment, the estimating logic is operable to estimate the current channel state following each transmission interval by selecting, as the first vector, the second vector if the second vector is within the recursive subset of vectors indicated by the portion of the updated channel state information provided within that transmission interval.

In one embodiment, the estimating logic is operable to estimate the current channel state following each transmission interval by selecting, as the first vector, a vector from within the recursive subset of vectors indicated by the portion of the updated channel state information provided within that transmission interval which is an average of the recursive subset of vectors indicated by the portion of the updated channel state information.

In one embodiment, the estimating logic is operable to estimate the current channel state following each transmission interval by selecting, as the first vector, a vector from within the recursive subset of vectors indicated by the portion of the updated channel state information provided within that transmission interval which is an average of the second vector and an average of the recursive subset of vectors indicated by the portion of the updated channel state information.

In one embodiment, the updated channel state information represents a change in phase between a first vector representing the current channel state, a second vector representing the previous channel state and the estimating logic is operable to estimate the current channel state by selecting, as the first vector, a vector having a phase offset from the second vector indicated by the updated channel state information.

In one embodiment, the reception logic is operable to receive updated channel state information over a single transmission interval, the updated channel state information representing one of a positive and negative phase offset from the second vector and the estimating logic is operable to estimate the current channel state by selecting, as the first vector, a vector adjacent the second vector having a phase offset indicated by the updated channel state information.

In one embodiment, the updated channel state information represents one of a clockwise and counter-clockwise phase offset from the second vector and the estimating logic is operable to estimate the current channel state by selecting, as the first vector, an adjacent vector which is one of clockwise and counter-clockwise from the second vector as indicated by the updated channel state information.

In one embodiment, the reception logic is operable to receive updated channel state information over a plurality of transmission intervals, each transmission interval providing a portion of the updated channel state information and the estimating logic is operable to estimate the current channel state following each transmission interval by selecting, as the first vector, a vector having a phase offset from the second vector indicated by the portion of the updated channel state information provided within that transmission interval.

In one embodiment, the updated channel station information comprises a sign portion representing a direction of phase offset from the second vector and at least one magnitude portion representing a magnitude of phase offset from the second vector and the estimating logic is operable to estimate the current channel state by selecting, as the first vector, a vector having a phase offset from the second vector indicated by the sign portion and the magnitude portion of the updated channel state information.

In one embodiment, the updated channel station information comprises at least one additional magnitude portion provided in at least one additional transmission interval representing an additional magnitude of phase offset from the second vector and the estimating logic is operable to estimate the current channel state by selecting, as the first vector, a vector having a phase offset from the second vector indicated by the sign portion and the additional magnitude portion of the updated channel state information provided within that additional transmission interval.

According to a third aspect, there is provided a method of providing a current channel state of a wireless communications channel provided between a first network node having at least two transmission antennas and a second network node having at least one reception antenna, the method comprising the steps of: determining updated channel state information, representing a change in channel state from a previous channel state represented by previous channel state information transmitted between the first network node and the second network node, which when combined with the previous channel state information provides an indication of current channel state; and transmitting, over at least one transmission interval, the updated channel state information, the channel state information being represented by a vector.

In one embodiment, the current channel state is represented by a first vector, the previous channel state information is represented by a second vector, the step of determining comprises: determining portions of the updated channel state information, each portion of updated channel state information representing a recursive subset of vectors encompassing the first vector and the step of transmitting comprises: transmitting, over a plurality of transmission intervals, the updated channel state information, each transmission interval providing a portion of the updated channel state information,

In one embodiment, the step of determining comprises: determining updated channel state information representing a change in phase between a first vector representing the current channel state and a second vector representing the previous channel state.

In one embodiment, the step of determining comprises: determining updated channel state information representing one of a positive and negative phase offset from the second vector and the step of transmitting comprises: transmitting the updated channel state information over a single transmission interval.

In one embodiment, the step of determining comprises: determining updated channel state information representing one of a clockwise and counter-clockwise phase offset from the second vector.

In one embodiment, the step of determining comprises: determining portions of updated channel state information each representing a phase offset from the second vector and the step of transmitting comprises: transmitting the updated channel state information over a plurality of transmission intervals, each transmission interval providing a portion of the updated channel state information.

In one embodiment, the step of determining comprises: determining a sign portion representing a direction of phase offset from the second vector and at least one magnitude portion representing a magnitude of phase offset from the second vector and the step of transmitting comprises: transmitting the sign portion in one transmission interval and the at least one magnitude portion in at least one transmission interval.

In one embodiment, the step of determining comprises: determining at least one additional magnitude of phase offset from the second vector and the step of transmitting comprises: transmitting the at least one additional transmission interval in at least one additional transmission interval.

According to a fourth aspect, there is provided a network node operable to provide a current channel state of a wireless communications channel provided between a first network node having at least two transmission antennas and a second network node having at least one reception antenna, the network node comprising: determining logic operable to determine updated channel state information, representing a change in channel state from a previous channel state represented by previous channel state information transmitted between the first network node and the second network node, which when combined with the previous channel state information provides an indication of current channel state; and transmission logic operable to transmit, over at least one transmission interval, the updated channel state information, the channel state information being represented by a vector.

In one embodiment, the current channel state is represented by a first vector, the previous channel state information is represented by a second vector, the determining logic is operable to determine portions of the updated channel state information, each portion of updated channel state information representing a recursive subset of vectors encompassing the first vector and the transmission logic is operable to transmit, over a plurality of transmission intervals, the updated channel state information, each transmission interval providing a portion of the updated channel state information.

In one embodiment, the determining logic is operable to determine updated channel state information representing a change in phase between a first vector representing the current channel state and a second vector representing the previous channel state.

In one embodiment, the determining logic is operable to determine updated channel state information representing one of a positive and negative phase offset from the second vector and the transmission logic is operable to transmit the updated channel state information over a single transmission interval.

In one embodiment, the determining logic is operable to determine updated channel state information representing one of a clockwise and counter-clockwise phase offset from the second vector.

In one embodiment, the determining logic is operable to determine portions of updated channel state information each representing a phase offset from the second vector and the transmission logic is operable to transmit the updated channel state information over a plurality of transmission intervals, each transmission interval providing a portion of the updated channel state information.

In one embodiment, the determining logic is operable to determine a sign portion representing a direction of phase offset from the second vector and at least one magnitude portion representing a magnitude of phase offset from the second vector and the transmission logic is operable to transmit the sign portion in one transmission interval and the at least one magnitude portion in at least one transmission interval.

In one embodiment, the determining logic is operable to determine at least one additional magnitude of phase offset from the second vector and the transmission logic is operable to transmit the at least one additional transmission interval in at least one additional transmission interval.

According to a fifth aspect there is provided a computer program product operable, when executed on a computer, to perform the methods steps of the first and third aspect.

According to a sixth aspect there is provided a method where an absolute value of a pre-coder is indicated by a first station to a second station using a first signalling occasion; this absolute value is refined by an indication transmitted in at least one subsequent signalling occasion; in a further subsequent signalling occasion, the refined value is updated by one of:(a) a relative update or (b) a new absolute value which is combined with the previous refined value. After each signalling occasion, the pre-coder used by the second station is updated according to the signalling received. Embodiments recognises the following:- that the number of bits available in one signalling occasion may be insufficient to indicate an absolute value of a pre-coder with satisfactory precision (and therefore embodiments allows for the value to be refined);- that delay in implementing the pre-coder is minimised by updating the used pre-coder after every signalling occasion;- that in fast-changing propagation channels, relative signalling alone (with a limited number of bits per signalling occasion) may not allow the pre-coder to be updated sufficiently fast, and therefore it may be beneficial to signal new absolute values, but that in such cases the previous refined value is still of some relevance and should be combined with the newly signalled absolute value rather than fully discarding the previous refined value.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 shows pre-coder logic provided within network nodes;
Figure 3 illustrates delay in the feedback of channel state information;
Figure 4 illustrates dividing the feedback of channel state information into three successive portions;
Figure 5 illustrates pre-coding vectors in a codebook of vectors within a unitary circle;
Figure 6 illustrates an example feedback of channel state information and the pre-coder vector selected in response to each portion;
Figure 7 illustrates an example feedback of channel state information and the pre-coder vector selected in response to each portion;
Figure 8 illustrates an example feedback of channel state information and the pre-coder vector selected in response to each portion;
Figure 9 illustrates an example feedback of channel state information and the pre-coder vector selected in response to each portion; and
Figure 10 illustrates selection of vectors using phase offset.

### DESCRIPTION OF THE EMBODIMENTS

### OVERVIEW

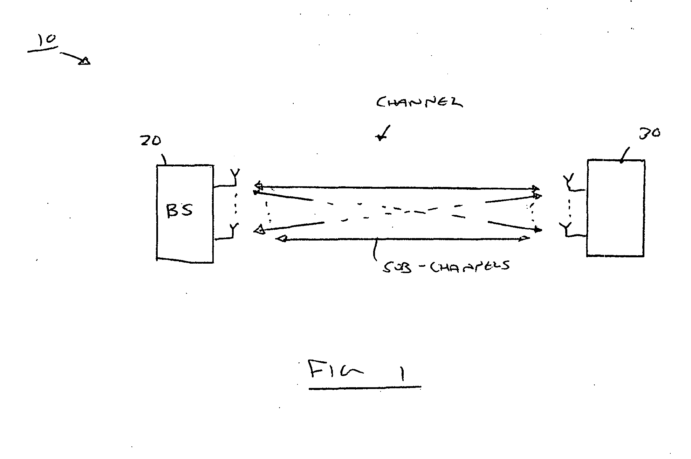

Figure 1 illustrates an arrangement of a base station 20 and user equipment 30 of a wireless telecommunications network, generally 10, according to one embodiment. The base station 20 and the user equipment 30 are examples of the first and second network nodes although it will be appreciated that other examples of network nodes to which the present technique may be applied exist and indeed the functionality of the base station and user equipment may be reversed. Although just one base station and user equipment is shown for sake of clarity, it will be appreciated that many such base stations and user equipment may be deployed in such a wireless telecommunications network. Each base station 20 is provided with M antennas, whilst each user equipment 30 is provided with N antennas. Typically, at least one of M and N is an integer value greater than 1. A MIMO radio channel is established between the base station 20 and the user equipment and sub-channels are provided between each antenna of the base station 20 and user equipment 30.

Each base station 20 and user equipment 30 comprises at least one processing means adapted to receive an indication of an index to at least one codebook from which channel state information can then be derived, and means to adjust its transmissions based on this channel state information.

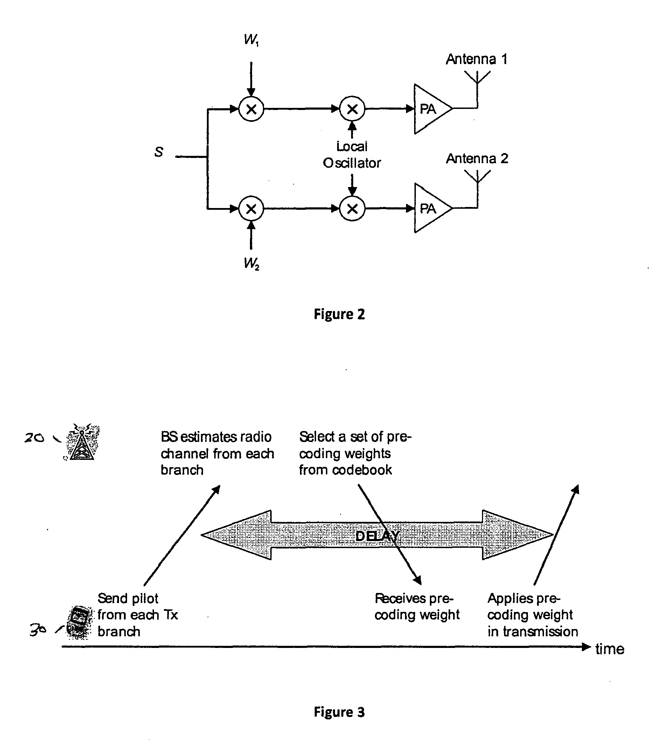

For example, Figure 2 shows logic provided within each base station 20 and user equipment 30 where the signal S is multiplied by pre-coding vectors W₁ and W₂ and they are transmitted via Antenna 1 and Antenna 2 respectively.

In a closed loop system, the pre-coding vectors are usually selected from a known codebook and they are fed back from the base station 20 to the user equipment 30. The base station 20 uses estimates of the radio channel to determine a set (or pair in dual-branch case) of pre-coding vectors for the user equipment 30 to use in the following transmission. As shown in Figure 3, there is delay in the feedback and during this delay, the radio conditions may have changed (e.g. when user equipment 30 is mobile), which may reduce the gain or even result in a loss. Although, the accuracy of the feedback may be increased by using more time to transmit it, this further increases the delay.

It is possible to update the pre-coding vectors using successive refinement, where a first feedback bit (or set of bits) indicates a pre-coding vector from a coarse codebook, and a subsequent feedback bit (or set of bits) indicates a refined pre-coding vector from a finer codebook typically having finer granularity but with reduced range. In such an approach, the feedback is received in several portions, where each portion is self-decodable and contains partial information that the user equipment can immediately use.

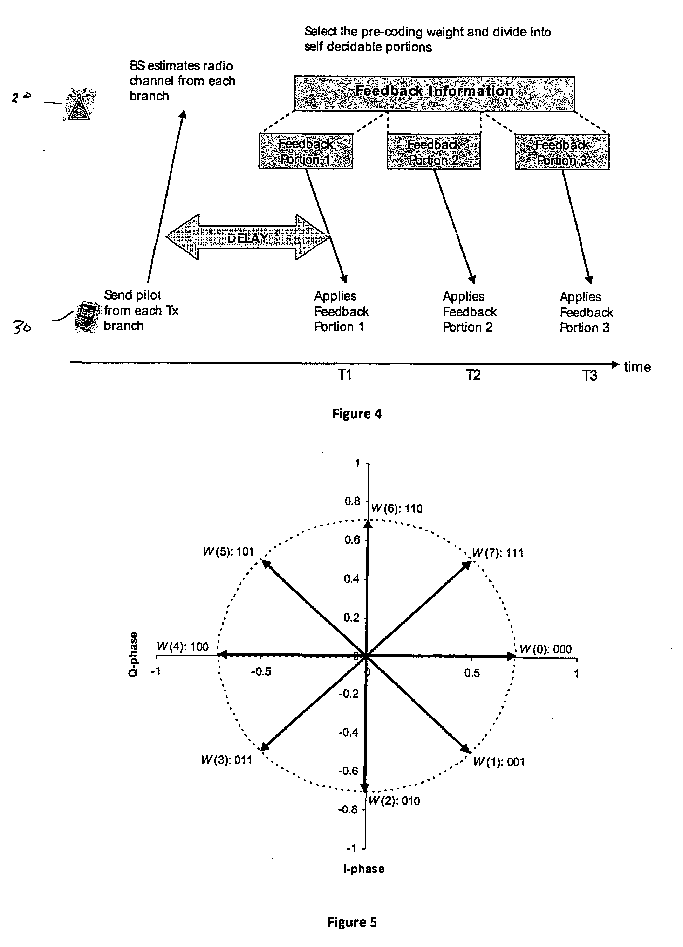

This is shown in Figure 4, where the base station 20 divides the feedback information into three portions and sends each portion out successively. Since each feedback portion is self-decodable, the user equipment 30 can decode it when it receives the portion and apply it to its transmission. Hence, referring to Figure 4, the user equipment 30 can start using feedback information at time T1 using this solution instead of time T3 in a feedback method without successive refinement. This reduces the delay in applying the feedback. In such an example, each successive feedback portion gives additional information and thereby consists of a gradual refinement to the overall feedback information.

In Figure 5, the pre-coding vectors in the codebook are, for example, vectors within a unitary circle. In this example, each vector is represented with three bits, although other representations are possible.

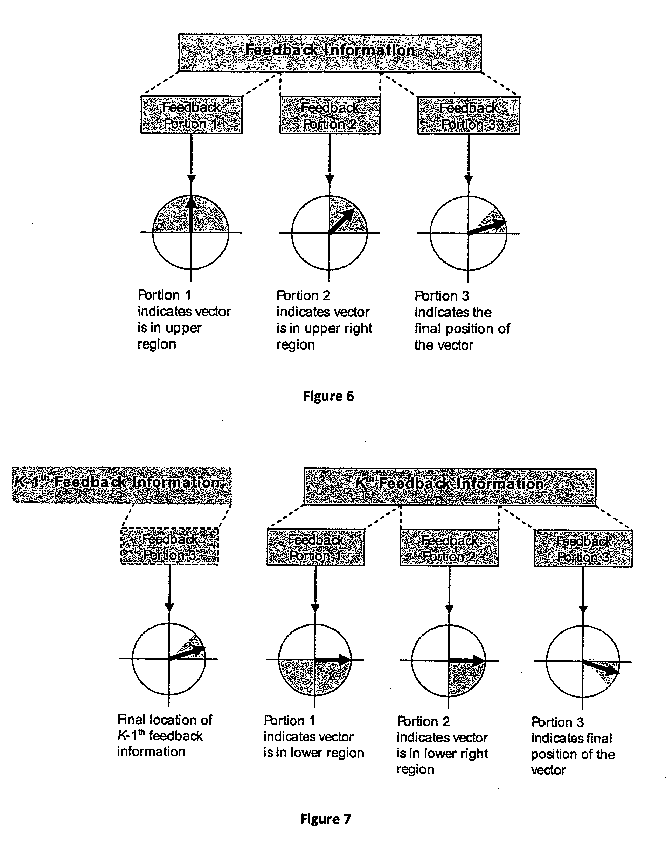

In this example, as shown in Figure 6, the first portion of the feedback tells the user equipment 30 that the pre-coding vector is within the upper region of the circle, the second portion of the feedback provide further information indicating that the pre-coding vector is on the upper right region of the circle and the third (and last) portion of the feedback, together with the 1^{st} and 2^{nd} portions, indicate the exact pre-coding vector. Hence, the first portion indicates that the pre-coding vector is within the sub-set of vectors in the upper or lower region of the circle, the second portion of the feedback provide further information indicating that the pre-coding vector within the sub-set is on the right or left region of the circle and the third (and last) portion of the feedback, together with the 1^{st} and 2^{nd} portions, indicate the exact pre-coding vector. In the embodiments described here, each signalling occasion (timeslot or transmission interval) signals a single bit. This is the case if, for example, the F-DPCH is used in UMTS. The first timeslot of the feedback, when the signalling starts, contains the coarsest vector of the overall feedback (e.g. vector points up or down as in Figure 6). The second and third timeslots refine the vector as shown in Figure 6.

### VECTOR INDICATION

In one embodiment, which uses three bits to indicate a vector as shown in Figure 6 above (although other quantisation schemes are possible), in the fourth timeslot (and the corresponding timeslot in other quantisation schemes), the first bit (coarsest indication) of a new pre-coder value is indicated. However, by recognising that the previous radio condition still has some relevance, the first portion of the vector should have the smallest vector distance (including zero) from the previous (final) vector. NOTE: If there is a significant delay between the last known vector and the newly received indicator, then the previous radio condition represented by the last known vector may not be valid. In this case, the last known vector is not needed to influence the first few portions signalled by the network.

For example, in Figure 7, the first portion of the current feedback information (*K*^{th} feedback) shows that the vector lies in the lower region. Instead of using a vector that points directly south, the previous feedback information (*K*-1^{th} feedback) is used and the vector in the lower region that has the smallest distance to the one indicated in the previous feedback information is used, which results in a vector pointing directly east. The second portion (together with the first portion) further shows that the vector should be in the lower right region and, once again, the vector with the smallest distance within that region is used. Finally, the third portion (together with the first and second portions), shows the final vector.

In one embodiment, a codebook size of eight is used where the pre-coding vectors are shown in Figure 6. The feedback is represented with three bits and each timeslot indicates one bit of the feedback. The most significant bit (MSB) is indicated in the first timeslot and it represents whether the vector is in the upper or lower region. The second most significant bit is indicated in the second timeslot and it represents whether it is in the right or left region. The least significant bit (LSB) is the third portion and together with the first and second portions, gives the final direction of the vector. This is summarised in Table 1.

**Table 1: Representation of each portion of the feedback information**

| **Value** | **1st Portion (MSB)** | **2nd Portion** | **3rd Portion (LSB)** |
|---|---|---|---|
| 0 | Lower region | The anti-clockwise quadrant. If 1st portion is 0, then this is the right hand region, otherwise this is the left hand region. | Final position of vector |
| 1 | Upper region | The clockwise quadrant. If 1 st portion is 0, then this is the left hand region, otherwise this is the right hand region | Final position of vector |

If no feedback has been sent prior to the *K*^{th} TTI, Table 2 shows an example of the three sequences of feedbacks sent in subsequent Transmission Time Intervals (TTIs), each TTI consisting here of 3 slots.

**Table 2: Sequences of feedbacks**

| **TTI** | **Feedback Info** | **Vector (See** **Figure 5****)** | **Portion** | | |
|---|---|---|---|---|---|
| | | | **1st** | **2nd** | **3rd** |
| *K* | 010 | *W*(2) | 0 | 1 | 0 |
| *K*+1 | 011 | *W*(3) | 0 | 1 | 1 |
| *K*+2 | 110 | *W*(6) | 1 | 1 | 0 |

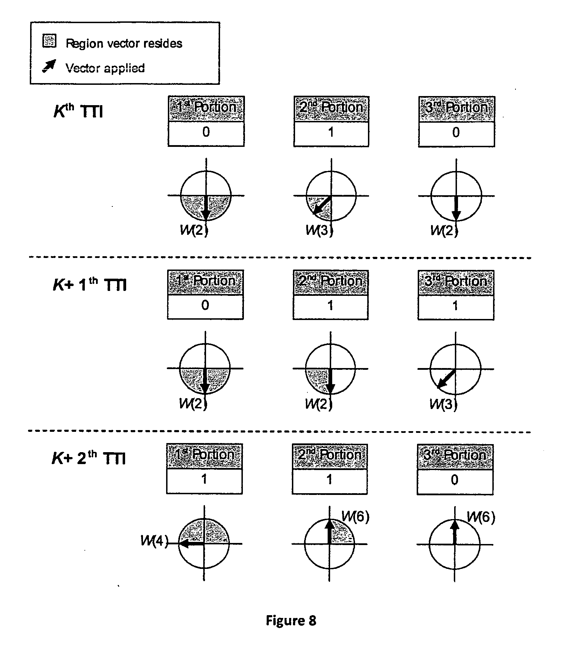

The vector applied when each portion of the feedback information is sent is shown in Figure 8.

At *K*^{th} TTI, there is no prior feedback information available (or there is significant delay since the last feedback information), and so the first portion, which is a "0" indicates that the vector resides in the lower half region. The user equipment 30 uses vector *W*(2) which is the average of all possible vectors in the lower region, quantised to a valid vector out of the set of 8. The second portion, which is a "1" indicates that the vector lies in the clockwise quadrant and so the user equipment 30 uses vector *W*(3). Finally with the third portion, the user equipment 30 gets the complete information of the vector (i.e. *W*(2)).

At the *K*+1^{th} TTI, the user equipment 30 has previous feedback information (i.e. vector W(2)). The 1^{st} portion, a "0", indicates that the vector lies in the lower region. The user equipment 30 performs the combining step by finding a vector in the lower region that has the smallest distance from vector *W*(2), which was the vector used in the *K*^{th} TTI (previous feedback) and this works out to be vector *W*(2) (i.e. 0 distance from the previous vector). The second portion, a "1", indicates that the vector lies in the left hand quadrant, which can be either *W*(2) or *W*(3). The user equipment 30 finds the smallest distance from *W*(2) (the vector used in the *K*^{th} TTI) and this is once again, *W*(2). Finally, the third portion, a "1", indicates the final position of the vector to be *W*(3).

At the *K*+2^{th} TTI, the 1^{st} portion, a "1", indicates that the vector resides in the upper region. Instead of using a vector that is an average of that region (i.e. vector *W*(6) if quantisation to valid vectors is applied), the user equipment 30 finds the vector that is closest to *W*(3) (the previous feedback) and this resulted in vector *W*(4) as shown in Figure 7. The 2^{nd} portion, a "1" indicates that the vector resides in the upper right hand quadrant. The user equipment 30 can use either vector *W*(6) or W(7) and since W(6) is closest in distance to W(3) (the previous feedback), the user equipment 30 uses vector W(6). Finally, the 3^{rd} portion, a "0", indicates that the final vector is *W*(6).

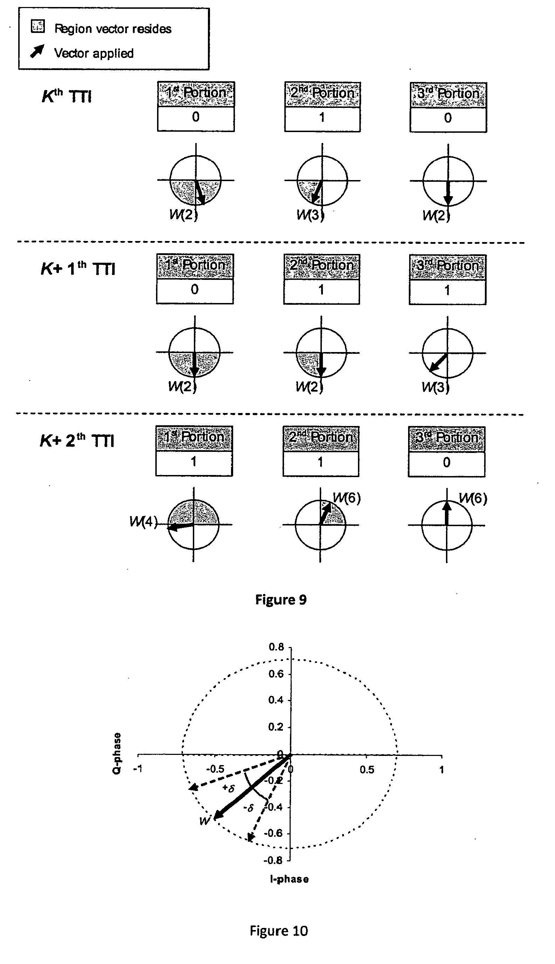

In a variation of this embodiment, the pre-coder used by the second station is not constrained to the set of 8 vectors that can be signalled by three feedback bits. This allows the second station to use pre-coders which are truly the average of the set of vectors indicated by the available feedback bits. An example of this case is shown in Figure 9.

At K^{th} TTI, there is no prior feedback information available, and so when the user equipment 30 receives the first bit, which is a "0", it uses a pre-coder corresponding to the average of the pre-coding vectors for which the MSB is 0; this results in a pre-coder mid-way between W(1) and W(2). After receiving the second bit of the feedback, which is a "1", the user equipment 30 uses a pre-coder which corresponds to the average of the pre-coding vectors for which the two MSBs are "01"; this results in a pre-coder mid-way between W(2) and W(3). Finally, with the third bit, the user equipment 30 gets the complete information of the vector and therefore uses the pre-coder *W*(2).

At the *K*+1^{th} TTI, the user equipment 30 has previous feedback information (i.e. vector W(2)). After receiving the first bit, a "0", one of three possibilities may be followed to perform the combining step, each possibility constituting a different variation of this embodiment:
- In the first variation (shown in Figure 9), the user equipment 30 continues to use pre-coder W(2), in view of the fact that the MSB is unchanged;
- In the second variation, the user equipment 30 switches to a pre-coding vector mid-way between W(2) and W(1), in view of the fact that this represents the average of the pre-coders for which the MSB is "0".
- In the third variation, the user equipment 30 uses a pre-coder which is the average of the previously-used pre-coder, W(2), and the pre-coder used in the first variation.

After receiving the second bit, similar variations are possible.

Finally, the third portion, a "1", indicates the final position of the vector to be W(3).

At the *K*+2^{tn} TTI, the first bit is a "1", and two possibilities are available:
- In the first variation, the user equipment 30 finds the vector that is closest to *W*(3) (the previous feedback), resulted in vector *W*(4);
- In the second variation, the user equipment 30 finds the vector that is the average of the previously-used vector (W(3)) and the average of the vectors for which the MSB is 1, as shown in Figure 9.

After receiving the second bit, a "1", similar possibilities are available; in Figure 9, the user equipment 30 chooses a pre-coder which is the average of the pre-coders for which the MSBs are "11". Finally, the third portion, a "0", indicates that the final vector is *W*(6).

It will be appreciated that any of these possibilities may be configured by higher-layer signalling.

It will also be appreciated that the loss in the achievable gain is proportional to the distance between the applied vector and the correct vector. If the feedback is not sent in portions, the user equipment 30 would apply vector *W*(3) during the first and second slots of the *K*+2^{th} TTI since it has to wait for the entire feedback to arrive. This would result in a lower gain, since the correct vector should be *W*(6). However, in embodiments, the user equipment 30 is able to use a vector that is closer to the correct vector during the first and second slots.

### PHASE OFFSET INDICATION

In one embodiment, which uses three bits to indicate a vector as shown in Figure 6 above (although other quantisation schemes are possible), in the fourth timeslot (and the corresponding timeslot in other quantisation schemes) and subsequent timeslots, the single bit is used to adjust the pre-coder using relative adjustments, i.e. +1 step or-1 step in relative phase using a "1" or "0" bit. The +1 and -1 indicates a clockwise or counter-clockwise change in phase. For example, if the previous vector was W(7) shown in Figure 5, then +1 would indicate W(0) and -1 would indicate W(6).

In one embodiment, the feedback consists of a phase offset to the current vector used by the user equipment 30 as shown in Figure 10, where the current vector is W and the base station 20 can feedback a phase change to the vector W by ±δ. Assume δ= {0, φ, 2φ, 3φ, 4φ, 5φ, 6φ, 7φ}, which can be represented by 3 bits. The direction of phase change can be indicated by one bit, i.e., "0" indicates a phase reduction (anti-clockwise change in the vector) and a "1" indicates a phase increment (clockwise change in the vector). The feedback information therefore consists of 4 bits. Each portion corresponds to the following changes to the phase:

**Table 3: Phase change in response to each portion**

| ***Value*** | **Portion** | | | |
|---|---|---|---|---|
| | **1^{st}** | **2nd** | **3^{rd}** | **4^{th}** |
| 0 | 0 | 0 | 0 | 0 |
| 1 | 0 | 4φ | 2φ | φ |

As shown in Table 3, the first portion indicates the direction and hence no phase change is required. In the rest of the portions, a "0" indicates no change. For the 2^{nd}, 3^{rd} and 4^{th} portions, a "1" indicates an additional change of 4φ, 2φ and φ respectively.

In this example, the feedback in the *K*^{th} and *K*+1^{tn} TTIs are shown in Table 4.

**Table 4: Phase change feedback**

| **TTI** | **Feedback Info** | **Phase change** | **Portion** | | | |
|---|---|---|---|---|---|---|
| | | | **1^{st}** | **2^{nd}** | **3^{rd}** | **4^{th}** |
| K | 0010 | -2φ | 0 | 0 | 1 | 0 |
| K+1 | 1101 | +5φ | 1 | 1 | 0 | 1 |

The changes in phase at the K^{th} TTI, due to each portion, are shown in Table 5.

**Table 5: Phase change applied by the user equipment 30 in the K^{th} TTI**

| **Portion** | **1^{st}** | **2nd** | **3rd** | **4th** |
|---|---|---|---|---|
| **Feedback Value** | 0 | 0 | 1 | 0 |
| **Phase Change Applied** | 0 | 0 | -2φ | 0 |
| **Total Phase Change** | 0 | 0 | -2φ | -2φ |

The changes in phase at the *K*+1^{th} TTI, due to each portion, are shown in Table 6.

**Table 6: Phase change applied by the user equipment 30 in the K+1^{th} TTI**

| **Portion** | **1 st** | **2nd** | **3rd** | **4^{th}** |
|---|---|---|---|---|
| **Feedback Value** | 1 | 1 | 0 | 1 |
| **Phase Change Applied** | 0 | +4φ | 0 | +φ |
| **Total Phase Change** | 0 | +4φ | +4φ | +5φ |

Embodiments enable a user equipment 30 to apply the feedback pre-coding vectors as soon as they arrive rather than wait till the entire feedback to arrive. By allowing an immediate application of the feedback, the user equipment 30 is able to minimize its loss due to changes in the channel. This simple implementation to the feedback structure allows a fast adaption of feedback information. This would be attractive to network that uses pre-coding in the uplink to increase the user equipment 30 speed. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of determining a current channel state of a wireless communications channel provided between a first network node having at least two transmission antennas and a second network node having at least one reception antenna, said method comprising the steps of:
receiving, over at least one transmission interval, updated channel state information representing a change in channel state from a previous channel state represented by previous channel state information transmitted between said first network node and said second network node, said channel state information being represented by a vector; and
estimating said current channel state by combining said updated channel state information with said previous channel state information.

2. The method of claim 1, wherein said current channel state is represented by a first vector, said previous channel state information is represented by a second vector, said step of receiving comprises:
receiving, over a plurality of transmission intervals, said updated channel state information, each transmission interval providing a portion of said updated channel state information, each portion of updated channel state information representing a recursive subset of vectors encompassing said first vector and said step of estimating comprises:
estimating said current channel state following each transmission interval by selecting, as said first vector, a vector within said recursive subset of vectors indicated by said portion of said updated channel state information provided within that transmission interval.

3. The method of claim 2, wherein said step of estimating comprises:
estimating said current channel state following each transmission interval by selecting, as said first vector, a vector from within said recursive subset of vectors indicated by said portion of said updated channel state information provided within that transmission interval which is closest in phase with said second vector.

4. The method of claim 2, wherein said step of estimating comprises:
estimating said current channel state following each transmission interval by selecting, as said first vector, said second vector if said second vector is within said recursive subset of vectors indicated by said portion of said updated channel state information provided within that transmission interval.

5. The method of claim 2, wherein said step of estimating comprises:
estimating said current channel state following each transmission interval by selecting, as said first vector, a vector from within said recursive subset of vectors indicated by said portion of said updated channel state information provided within that transmission interval which is an average of said recursive subset of vectors indicated by said portion of said updated channel state information.

6. The method of claim 2, wherein said step of estimating comprises:
estimating said current channel state following each transmission interval by selecting, as said first vector, a vector from within said recursive subset of vectors indicated by said portion of said updated channel state information provided within that transmission interval which is an average of said second vector and an average of said recursive subset of vectors indicated by said portion of said updated channel state information.

7. The method of claim 1, wherein said updated channel state information represents a change in phase between a first vector representing said current channel state, a second vector representing said previous channel state and said step of estimating comprises:
estimating said current channel state by selecting, as said first vector, a vector having a phase offset from said second vector indicated by said updated channel state information.

8. The method of claim 7, wherein said step of receiving comprises receiving updated channel state information over a single transmission interval, said updated channel state information representing one of a positive and negative phase offset from said second vector and said step of estimating comprises:
estimating said current channel state by selecting, as said first vector, a vector adjacent said second vector having a phase offset indicated by said updated channel state information.

9. The method of claim 8, wherein said updated channel state information represents one of a clockwise and counter-clockwise phase offset from said second vector and said step of estimating comprises:
estimating said current channel state by selecting, as said first vector, an adjacent vector which is one of clockwise and counter-clockwise from said second vector as indicated by said updated channel state information.

10. The method of claim 7, wherein said step of receiving comprises receiving updated channel state information over a plurality of transmission intervals, each transmission interval providing a portion of said updated channel state information and said step of estimating comprises:
estimating said current channel state following each transmission interval by selecting, as said first vector, a vector having a phase offset from said second vector indicated by said portion of said updated channel state information provided within that transmission interval.

11. The method of claim 10, wherein said updated channel station information comprises a sign portion representing a direction of phase offset from said second vector and at least one magnitude portion representing a magnitude of phase offset from said second vector and said step of estimating comprises:
estimating said current channel state by selecting, as said first vector, a vector having a phase offset from said second vector indicated by said sign portion and said magnitude portion of said updated channel state information.

12. The method of claim 11, wherein said updated channel station information comprises at least one additional magnitude portion provided in at least one additional transmission interval representing an additional magnitude of phase offset from said second vector and said step of estimating comprises:
estimating said current channel state by selecting, as said first vector, a vector having a phase offset from said second vector indicated by said sign portion and said additional magnitude portion of said updated channel state information provided within that additional transmission interval.

13. A network node operable to determine a current channel state of a wireless communications channel provided between a first network node having at least two transmission antennas and a second network node having at least one reception antenna, said network node comprising:
reception logic operable to receive, over at least one transmission interval, updated channel state information representing a change in channel state from a previous channel state represented by previous channel state information transmitted between said first network node and said second network node, said channel state information being represented by a vector; and
estimating logic operable to estimate said current channel state by combining said updated channel state information with said previous channel state information.

14. A method of providing a current channel state of a wireless communications channel provided between a first network node having at least two transmission antennas and a second network node having at least one reception antenna, said method comprising the steps of:
determining updated channel state information, representing a change in channel state from d previous channel state represented by previous channel state information transmitted between said first network node and said second network node, which when combined with said previous channel state information provides an indication of current channel state; and
transmitting, over at least one transmission interval, said updated channel state information, said channel state information being represented by a vector.

15. A network node operable to provide a current channel state of a wireless communications channel provided between a first network node having at least two transmission antennas and a second network node having at least one reception antenna, said network node comprising:
determining logic operable to determine updated channel state information, representing a change in channel state from a previous channel state represented by previous channel state information transmitted between said first network node and said second network node, which when combined with said previous channel state information provides an indication of current channel state; and
transmission logic operable to transmit, over at least one transmission interval, said updated channel state information, said channel state information being represented by a vector.
